Europäisches Patentamt

European Patent Office

Office européen des brevets

(11) Veröffentlichungsnummer: **0 686 684 A1**

# (12) EUROPÄISCHE PATENTANMELDUNG

(21) Anmeldenummer: **95108021.7**

(22) Anmeldetag: **24.05.95**

(51) Int. Cl.⁶: **C09K 3/14**, C10M 173/02,
B28D 1/02, B24B 37/00

(30) Priorität: **06.06.94 DE 4419707**
**26.08.94 DE 4430308**

(43) Veröffentlichungstag der Anmeldung:
**13.12.95 Patentblatt 95/50**

(84) Benannte Vertragsstaaten:
**BE CH DE FR IT LI**

(71) Anmelder: **BAYER AG**

**D-51368 Leverkusen (DE)**

(72) Erfinder: **Koch, Wolfgang, Dr.**
**Hoeningshausstr. 63**
**D-47809 Krefeld (DE)**
Erfinder: **Krumbe, Wolfgang, Dr.**
**Bremersheide 16**
**D-42799 Leichlingen (DE)**
Erfinder: **van Lent, Boudewijn, Dr.**
**In der Auen 19**
**D-51427 Bergisch Gladbach (DE)**
Erfinder: **Schiffer, Michael**
**Gartenstr. 90**
**D-47574 Goch (DE)**
Erfinder: **Tischtau, Robert, Dr.**
**Sengelsweg 61**
**D-40489 Düsseldorf (DE)**

(54) **Sägesuspension**

㊼ Die vorliegende Erfindung betrifft eine Sägesuspension, bestehend aus einem Abrasivstoff in flüssiger wäßriger Phase.

Die vorliegende Erfindung betrifft eine Sägesuspension, bestehend aus einem Abrasivstoff in flüssiger wäßriger Phase.

Es ist bereits bekannt, daß anorganische Festkörper mit einer multiplen Drahtsäge unter Anwendung einer Ölslurry gesägt werden können. Hierzu wird das die Abrasivstoffe-haltige Ölslurry von einem Sägedraht mitgerissen und somit der zu zerteilende Festkörper zersägt. Ein Anwendungsbeispiel ist unter anderen die Zerteilung von Siliciumblöcken in einzelnen Siliciumscheiben, die ihren Einsatz in der Photovoltaik finden. Alternative Ausführungen sind nach dem Stand der Technik Slurrybäder, in denen der zu sägende Festkörper während des Sägevorganges von der Suspension umspült wird.

Üblicherweise verwendete Sägeslurries bestehen aus einem Gemisch aus Öl und einem pulverförmigen Hartstoff. Man verwendet beispielsweise Mischungsverhältnisse von Öl zu Hartstoff (l/kg) von 0,7 bis 1,1. Das Öl besitzt eine kinematische Viskosität von ca. 32 mm$^2$/s (40°C) und der Hartstoff eine Körnung von etwa 5-20 µm. Während des Schnittes zirkuliert die Slurry im Kreislauf, d.h. vom Vorratsbehälter über einen Kühler, über die Düsen und zum Vorratsbehälter zurück. Die Slurry kann für ca. 2-5 Sägeschnitte eingesetzt werden.

Die Nachteile bei der Verwendung ölgebundener Sägeslurries sind vielfältig. Durch die starke Benetzung und Verschmierung der Scheiben mit Öl sind die gesägten Scheiben nur schwer voneinander zu trennen und nur durch Einsatz von sogenannte Kaltreinigern und großer Tensidmengen zu reinigen.

Die organischen Verbindungen der Öle und Kaltreiniger sind nur mit hohem Aufwand entsorgbar und ökologisch bedenklich. Weiterhin ist die Aufbereitung der Ölslurry zur Wiederverwendung von Öl und Hartstoff schwierig und technisch aufwendig. Die hohen Kosten bei Verwendung der Öle und Reinigungsmittel und die Entsorgung oder das Recycling der Substanzen erfordern eine Kostenreduktion.

Aus der EP-A 84 966 ist weiterhin bekannt, daß mit einer Slurry mit "overbased Materials" oder Metallkolloiden in einer wäßrigen Dispersion unter Verwendung von organischem Lösemittel beziehungsweise Öle, anorganische Festkörper gesägt werden können. Um diese Slurries herzustellen, müssen die verwendeten kolloidalen Partikel erst über eine aufwendige Reaktion hergestellt werden. Die bei der Ölslurry beschriebene Nachteile sind bei dieser Zusammensetzung noch nicht ausreichend beseitigt.

Aufgabe dieser Erfindung ist daher die Bereitstellung einer Sägeslurry, die die beschriebenen Nachteile des Standes der Technik nicht aufweist.

Es wurde überraschenderweise gefunden, daß man zum Sägen von anorganischen Festkörpern eine wäßrige Suspension verwenden kann, die keine oder nur unwesentliche Anteile organischer Lösemittel und oder Öle enthält, in der ein Abrasivstoff in einer wäßrigen Phase suspendiert ist, die einen Verdicker, z.B. wasserlösliche Polymere enthält.

Gegenstand dieser Erfindung ist somit eine Sägesuspension, bestehend aus einem Abrasivstoff in flüssiger wäßriger Phase, wobei die wäßrige Phase ein oder mehrere wasserlösliche Polymere enthält. Bevorzugt weist die erfindungsgemäße Sägesuspension einen Gehalt an Öl von kleiner als 0,01 Gew.-% auf.

Bevorzugt ist das erfindungsgemäße wasserlösliche Polymer eines, mehrere und/oder ein oder mehrere Copolymere aus der Gruppe der Polyoxide, Polyether, Polyethylenimine, Polycarboxylate, modifizierte Cellulose, Polyvinylalkohole, Polyvinylacetate, Polyvinylpyrrolidone, Polyvinyloxazolidone, Polyethylensulfonsäure, Polystyrolsulfonsäure, Polyphosphorsäure, Polysalicylsäure, Polyvinylamine, Polyvinylpyridine, Polyvinylsulfonsäure, Polydiallyldimethylammoniumchloride, Polybrene [= Poly-(Dimethylimino)-Trimethylen-(Dimethylimino)-Hexamethylen Dibromide], Polyvinylphosphonsäure, Polyethylenphosphonsäure, Polymaleinsäure, Poly(2-Methacryloyloxyethan-1-sulfonsäure) ist.

Es sollte in einer solchen Menge in der wäßrigen Phase vorliegen, daß die Viskosität der wäßrigen Phase zwischen 10 und 5 000 mPas beträgt, gemessen bei einer Schergeschwindigkeit von 10 s$^{-1}$. Durch Zugabe von Säure oder Base, z.B. Salzsäure und Natronlauge, kann unter Verwendung bestimmter Polymere, z.B. solcher, die schwach saure Gruppen enthalten, das Sedimentationsverhalten des Abrasivstoffes in Slurry pH-abhängig eingestellt werden. Bevorzugt enthalten somit die erfindungsgemäßen Polymere schwach saure Gruppen. Besonders bevorzugte wasserlösliche Polymere stellen Polyacrylsäure und/oder Polyacrylate mit einem mittleren Molekulargewicht von 100 000 bis 2 000 000 dar.

Die wasserlöslichen Polymere wirken im Sinne dieser Erfindung als Verdicker. Diese Wirkung kann auch durch die Anwesenheit von mehrwertigen Alkoholen und/oder anorganischen Feststoffen, wie z.B. Kieselsol erreicht werden.

Gute Sägeleistungen werden erreicht, wenn die Sägesuspension einen pH-Wert von größer als 6 aufweist. Weiterhin kann die Sägeleistung der erfindungsgemäßen Sägesuspension durch die Anwesenheit von Tensiden verbessert werden. Dabei sollte die Oberflächenspannung der Suspension vorteilhaft unter 40 mN/m betragen.

2

Schließlich wird durch die Anwesenheit eines Korrosionsschutzes die Korrosion des Sägedrahtes und der metallhaltigen Bestandteile der Säge verringert, was sich darüberhinaus auch positiv auf die Sägeleistung auswirkt.

Der anorganische Hartstoff im Sinne dieser Erfindung ist bevorzugt ein Pulver aus der Gruppe der Metall- oder Metalloxid-carbide, -nitride, -carbonitride, -oxiniride, -oxide, -boride, Hartmetalle, Diamant oder deren Mischungen ist, wobei die Metalle- oder Metalloide Elemente der 3., 4., 5. Hauptgruppe oder 3., 4., 5., 6., 7., 8. Nebengruppe des Periodensystems sind. Besonders bevorzugt sind dabei Aluminiumoxid, Borcarbid, Eisenoxid, Titancarbid, Zirkonoxid, Titannitrid, Siliciumnitrid und/oder Siliciumdioxid.

Als Hartstoffe beim Sägen von Silicium sind insbesondere Diamant und/oder Siliciumcarbid geeignet Die Hartstoffe weisen dabei bevorzugt eine mittlere Partikelgröße im Bereich von 0,2 und 100 $\mu$m auf.

Die Herstellung der erfindungsgemäßen Sägeslurry kann durch einfaches Dispergieren der abrasiven Feststoffe in die wäßrige Phase mit der gewünschten Zusammenstellung hergestellt werden.

Indem zum Beispiel Polymere mit schwach sauren Gruppen verwendet werden, kann die wäßrige Sägesuspension ohne aufwendige Aufbereitung wiederverwendet werden dadurch, daß nach pH-Wert-Änderung die Viskosität erniedrigt, die Sedimentationszeit verringert und der abrasive Feststoff schneller abgetrennt werden kann. Die Viskosität und eventuell die Oberflächenspannund oder die Konzentraton des Korrosionsschutzmittels werden dann wieder auf ihre Anfangswerte eingestellt.

Die Reinigung des Festkörpers kann durch einfaches Spülen mit Wasser erfolgen. Die Menge an Abfall ist auf den Abrasivstoff, den Abrieb und einen geringen Anteil der wäßrigen Phase, inklusive der zugegebenen Komponenten reduziert. Die Umweltbelastung ist im Vergleich zu den bekannten Verfahren damit reduziert. Die Verwendung solch einer wäßrigen Suspension führt zu einer Verringerung der Kosten des Sägeverfahrens, da sowohl die Reinigungskosten als auch die Abfallbeseitigungskosten die bei den beiden oben beschriebenen Verfahren entstehen, höher sind. Außerdem sind die üblicherweise verwendeten Öle plus Schleifmittel bei den heutigen Preisen teurer als die wäßrige Sägeslurry.

Die Sägesuspension wird z.B. wie folgt angesetzt. Es wird Wasser vorgelegt und dann die gewünschte Menge Polymer zugegeben. Mit Säure oder Base wird der pH-Wert eingestellt. Die Viskosität dieser Lösung liegt zwischen 10 und 1000 mPas bei einer Schergeschwindigkeit von $10s^{-1}$. Eine bestimmte Menge Korrosionsschutzmittel wird zugegeben und der pH-Wert mit Säure oder Base nachgeregelt. Zusätzlich wird Tensid zugegeben bis die Oberflächenspannung maximal 40 mN/m, bevorzugt maximal 25 mN/m, beträgt. Als letztes wird der Abrasivstoff zudosiert und der pH-Wert noch einmal überprüft und nachgeregelt.

Es können kationische, anionische oder nichtionische Tenside eingesetzt werden. Welches Ladungszeichen das Tensid bevorzugt haben muß, ist von dem eingesetzten Hartstoff, Polymer und anorganischen Verdicker abhängig.

Bevorzugt werden Polymere und Tenside eingesetzt, die das gleiche Ladungsvorzeichen haben wie der Abrasivstoff in der wäßrigen Slurry. Das Ladungsvorzeichen des Abrasivstoff kann durch Ermittlung des Zeta-Potentials erhalten werden. Dieses Zeta-Potential kann mit Hilfe von bekannten Techniken, wie Mikro-Elektrophorese, Strömungspetentialmessungen oder Akustophorese erfaßt werden.

Man muß dazu den Abrasivstoff in Wasser dispergieren und das Zeta-Potential bei gleichem pH-Wert, wie man die Slurry eingestellt hat, mittels einer der genannten Methoden ermitteln. Für Abrasivstoffe, die ein negatives Zeta-Potential aufweisen, werden in der Slurry dann bevorzugt anionische Polymere und Tenside und für Abrasivstoffe, die ein positives Zeta-Petential aufweisen, werden bevorzugt kationische Polymere und Tenside eingesetzt.

Auch beim Einsatz von anorganischen Verdickern ist es vorteilhaft, wenn diese das gleiche Ladungsvorzeichen wie das Zeta-Potential des Abrasivstoffes aufweisen.

Die Reinigung des mittels der erfindungsgemäßen Sägesuspension zersägten Festkörpers kann durch Spülen mit Wasser erfolgen. Die Menge an Abfall ist auf den Abrasivstoff, den Abrieb und einen geringen Anteil der wäßrigen Phase, inklusive der zugegebenen Komponenten, reduziert. Die Umweltbelastung ist im Vergleich zu den bekannten Verfahren damit reduziert.

Die erfindungsgemäße Sägesuspension kann die beschriebenen Ölslurries völlig ersetzen. Es muß als ausgesprochen überraschend bezeichnet werden, daß eine wäßrige Suspension die gleiche Sägeleistung wie eine auf Mineralölbasis hergestellte Suspension erreichen kann.

Die Sägeleistung wurde mit Hilfe einer Fadensäge Typ H7 der Firma Lipoldt KG, Freiburg, überprüft. Der zu sägende Festkörper wurde über 2 Düsen mit Slurry besprüht. Als Maß für die Sägeleistung wurde die Zeit definiert, um bei konstanter Einstellung des Gerätes einen Festkörper bestimmter Größe in zwei Teile zu zersägen. Zusätzlich wurde das Oberflächenprofil mittels einer Rauhigkeitsmessung bestimmt. Die Oberflächenrauhigkeiten mit der wäßrigen Slurry oder Ölslurry gesägter Festkörper sind vergleichbar.

EP 0 686 684 A1

Überraschend ist die äußerst geringe Korrosion der Sägedrähte und von Gußeisen bei pH-Werten über 8 und Einsatz von Korrosionsschutzmittel in der wäßrigen Suspension nach der vorliegenden Erfindung.

Die erfindungsgemäße Slurry hat im allgemeinen die folgende Wirkung. Sie benetzt die zu sägende Schnittfläche und den Sägedraht bzw. das Sägeblatt. Die Slurry funktioniert als Schleif und Kühlmittel zwischen Draht bzw. Blatt und dem anorganischen Festkörper. Selbstverständlich kann auch der gesamte Sägevorgang völlig in der Suspension durchgeführt werden.

Die erfindungsgemäße Suspension ermöglicht das Sägen von anorganischen Werkstoffen und hat gegenüber dem gegenwärtig meist benutzten Ölslurry-Verfahren insbesondere folgende Vorteile:

Das Entfernen von Suspensionsresten vom Festkörper ist mit weniger Aufwand (kein Einsatz von Lösemittel und/oder Renigungslösungen) durchzuführen. Reinigung mit Wasser genügt.

Es entsteht weniger Abfall, der entsorgt werden muß, da die wäßrige Phase wieder verwendet werden kann.

Die erfindungsgemäße Suspension wird nachfolgend beispielhaft erläutert, ohne daß hierin eine Einschränkung zu sehen ist.

## Beispiel 1

10 Gramm Polyacrylsäure (Molekulargewicht = 450.000) wurde vorgelegt und unter ständigem Rühren in 990 Gramm demineralisiertem Wasser gelöst. Diese Lösung wurde mit 45 gew.-%iger LiOH auf einen pH-Wert von 10 eingestellt. Dann wurden 20 g Reocor 190 (eine organische Polycarbonsäure neutralisiert mit Triethanolamin, Handelsprodukt der Firma Ciba Geigy, Basel, Schweiz) zugegeben und nachträglich wieder der pH-Wert auf pH 10 eingestellt. An dieser Lösung wird 10 g Dodecylbenzolsulfonat zugegeben. Der pH-Wert wurde auf 10 gehalten. Bezogen auf 1000 g Lösung wurde 1600 g Siliziumcarbid zugegeben und mit einem Laborrührer bei 2000 Umdrehungen pro Minute über 30 Minuten eingerührt. Die Sägeleistung betrug 62 % bezogen auf Ölslurries.

Im folgenden sind tabellarisch die Zusammensetzung weiterer erfindungsgemäßer Sägeslurries sowie mit ihnen erzielte Sägeleistungen aufgeführt.

Alle Slurries enthalten 61,3 Gew-% Siliciumcarbid bezogen auf Gesammtslurry. Der pH-Wert wurde mit Lithiumhydroxid eingestellt. Als Vergleichsslurry ist die Ölslurry aufgeführt.

Die wässrige Phase enthielt außer Wasser die folgenden Komponenten (die Konzentration sind bezogen auf die Wasserphase):

4

|  | Polymer | Tensid | Korrosions-schutz | pH | Säge-leistung |
|---|---|---|---|---|---|
| Ölslurry (Standard) | Öl/Viskosität = 55 mPas |  |  |  | 100 % |
| Bsp.2 | 1,1 Gew.-% Polyacrylsäure Molekulargewicht 450 000 | 0,5 Gew.-% Tetraethyl-ammonium-perfluoroktan-sulfonat |  | 10 | 97 % |
| Bsp.3 | 20 Gew.-% Polyacrylsäure Molekulargewicht 250 000 | 0,5 Gew.-% Tetraethyl-ammonium-perfluoroktan-sulfonat |  | 10 | 104 % |
| Bsp.4 | 3 Gew.-% Viscalex HV 30* | 0,1 Gew.-% Tetraethyl-ammonium-perfluoroktan-sulfonat | 0,5 Gew.-% Zimtsäure | 10 | 102 % |
| Bsp.5 | 1,63 Gew.-% Rheovis CR* | 0,1 Gew.-% Tetraethyl-ammonium-perfluoroktan-sulfonat | 2 Gew.-% Reocor 190* | 10 | 105 % |
| Bsp.6 | 4 Gew.-% Viscalex HV 30 |  | 2 Gew.-% Reocor 190 | 10 | 105 % |
| Bsp.7 | 2 Gew.-% Rheovis CR |  | 2 Gew.-% Reocor 190 | 10 | 106 % |
| Bsp.8 | 3 Gew.-% Aerosil Mittlerer Teilchendurch-messer ist 7 nm | 0,5 Gew.-% Tetraethyl-ammonium-perfluoroktan-sulfonat |  | 10 | 102 % |
| Bsp.9 | 1 Gew.-% Polyacrylsäure Molekulargewicht 450 000 |  |  | 10 | 54 % |
| Bsp.10 | 5 Gew.-% Polyvinylpyrro-lidon Molekulargewicht 1 250 000 |  |  | 10 | 50 % |

Reocor 190:        Eine organische Polycarbonsäure neutralisiert mit Triethanol-amin der Firma Ciba Geigy, Basel, Schweiz.

Viscalex HV 30:      Ein Carboxylgruppen-haltiges Acrylcopolymerisat, Handels-produkt der Firma Allied Colloids GmbH, Hamburg.

Rheovis CR:         Ein Acrylat-Assoziativ-Verdicker, Handelsprodukt der Firme Allied Colloids GmbH, Hamburg.

## Patentansprüche

1. Sägesuspension, bestehend aus einem Abrasivstoff in flüssiger wäßriger Phase, dadurch gekennzeichnet, daß die flüssige Phase ein oder mehrere wasserlösliche Polymere enthält.

2. Sägesuspension gemäß Anspruch 1, dadurch gekennzeichnet, daß sie einen Gehalt an Öl von kleiner als 0,01 Gew.-% aufweist.

3. Sägesuspension gemäß einem der Ansprüche 1 oder 2, dadurch gekennzeichnet, daß das wasserlösliche Polymer eines oder mehrere oder ein oder mehrere Copolymere aus der Gruppe der Polyoxide, Polyether, Polyethylenimine, Polycarboxylate, modifizierte Cellulose, Polyvinylalkohole, Polyvinylacetate, Polyvinylpyrrolidone, Polyvinyloxazolidone, Polyethylensulfonsäure, Polystyrolsulfonsäure, Polyphosphorsäure, Polysalicylsäure, Polyvinylamine, Polyvinylpyridine, Polyvinylsulfonsäure, Polydiallyldi-methylammoniumchlorid, Polybrene [= Poly-(Dimethylimino)-Trimethylen-(Dimethylimino)-Hexamethylen Dibromide], Polyvinylphosphonsäure, Polyethylenphosphonsäure, Polymaleinsäure, Poly(2-Methacryloyloxyethan-1-sulfonsäure) ist.

4. Sägesuspension gemäß einem oder mehreren der Ansprüche 1 bis 3, dadurch gekennzeichnet, daß die Viskosität der wäßrigen Phase zwischen 10 und 1000 mPas beträgt.

5. Sägesuspensionen gemäß einem oder mehreren der Ansprüche 1 bis 4, dadurch gekennzeichnet, daß die wasserlöslichen Polymere schwach saure Gruppen enthalten.

6. Sägesuspension gemäß einem oder mehreren der Ansprüche 1 bis 5, dadurch gekennzeichnet, daß das wasserlösliche Polymer ein Polycarboxylat ist.

7. Sägesuspension gemäß einem oder mehreren der Ansprüche 1 bis 5, dadurch gekennzeichnet, daß das wasserlösliche Polymer eine Polyacrylsäure und/oder Polyacrylat mit einem mittleren Molekulargewicht von 500 bis 1.000.000 ist.

8. Sägesuspension gemäß einem oder mehreren der Ansprüche 1 bis 7, dadurch gekennzeichnet, daß sie einen pH-Wert > 6 aufweist.

9. Sägesuspension gemäß einem oder mehreren der Ansprüche 1 bis 8, dadurch gekennzeichnet, daß die wäßrige Phase Tenside enthält und die Oberflächenspannung der Suspension unter 40 mN/m beträgt.

10. Sägesuspension gemäß Anspruch 1, dadurch gekennzeichnet, daß sie ein Korrosionsschutzmittel enthält.

11. Sägesuspension gemäß einem oder mehreren der Ansprüche 1 bis 10, dadurch gekennzeichnet, daß der abrasive anorganische Hartstoff ein Pulver aus der Gruppe der Metall- oder Metalloid-carbide, -nitride, -carbonitride, - oxinitride, -oxide, -boride, Hartmetalle, Diamant oder deren Mischungen ist, wobei die Metall- oder Metalloide Elemente der 3., 4., 5. Hauptgruppe oder 3., 4., 5., 6., 7., 8. Nebengruppe des Periodensystems ist.

12. Sägesuspension gemäß Anspruch 11, dadurch gekennzeichnet, daß der Hartstoff Aluminiumoxid, Borcarbid, Eisenoxid, Titancarbid, Zirkonoxid, Titannitrid, Siliciumnitrid und/oder Siliciumdioxid ist.

13. Sägesuspension gemäß Anspruch 11, dadurch gekennzeichnet, daß der Hartstoff Diamant und/oder Siliciumcarbid ist.

14. Sägesuspension gemäß einem oder mehreren der Ansprüche 1 bis 13, dadurch gekennzeichnet, daß der Abrasivstoff eine mittlere Partikelgröße zwischen 0,2 und 100 $\mu$m aufweist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | US-A-4 853 140 (PAYNE CHARLES C ET AL) 1.August 1989 * Zusammenfassung * --- | 1 | C09K3/14 C10M173/02 B28D1/02 B24B37/00 |
| A | PATENT ABSTRACTS OF JAPAN vol. 014 no. 134 (C-0701) ,14.März 1990 & JP-A-02 006586 (MITSUBISHI MONSANTO CHEM CO) 10.Januar 1990, * Zusammenfassung * --- | 1,3,5-8 | |
| A | US-A-4 752 628 (PAYNE CHARLES C) 21.Juni 1988 * Zusammenfassung * --- | 1,3,5,10 | |
| A | GB-A-1 090 526 (FORD MOTOR CO.) * Seite 2, Zeile 1 - Zeile 97 * ----- | 11-13 | |

|  | RECHERCHIERTE SACHGEBIETE (Int.Cl.6) |
|---|---|
|  | C09K C10M B28D B24B |

Der vorliegende Recherchenbericht wurde für alle Patentansprüche erstellt

| Recherchenort | Abschlußdatum der Recherche | Prüfer |
|---|---|---|
| DEN HAAG | 19.September 1995 | Eschbach, D |